# EUROPEAN PATENT APPLICATION

(11) **EP 3 553 495 A1**
(43) Date of publication of application: **16.10.2019**
(21) Application number: 19167240.1
(22) Date of filing: 04.04.2019
(51) Int. Cl.: G01N 13/02, G01N 21/90, G01N 21/94

(54) **METHOD TO EVALUATE CYLINDER CLEANLINESS**

(30) Priority: 11.04.2018 US 201862655941 P
(71) Applicant: Airgas, Inc., Radnor, Pennsylvania 19087 (US)
(72) Inventor: JACKSIER, Tracey, Radnor, PA 19037, PA Pennsylvania (US)
(74) Representative: Mellul-Bendelac, Sylvie Lisette

(57) **Abstract**

A method of gas cylinder interior cleanliness validation, including placing a volume of liquid on an interior surface of a component of a gas cylinder, measuring a contact angle of the liquid on the interior surface, and estimating from the contact angle the cleanliness of the interior surface with respect to at least one contaminant.

## Description

A calibration gas is a reference gas, or gas mixture, that is used as a standard in the calibration of certain analytical instruments. A calibration gas must be very precisely defined and prepared to maintain stability of concentration and composition over time. There are a number of possible influences that may cause this highly particular mixture to vary over time.

One of the most important factors affecting the shelf life of a gas mixture is the reactivity of the components of the mixture with any contaminants that may be present on the interior surface of the cylinder. However, the actual criteria for passing or failing may not be easily defined or identified. Hence, there exists within the industry a need for a well-defined cylinder cleanliness assessment test, with good repeatability and accuracy.

A method of gas cylinder interior cleanliness validation, including placing a volume of liquid on an interior surface of a component of a gas cylinder, measuring a contact angle of the liquid on the interior surface, and estimating from the contact angle the cleanliness of the interior surface with respect to at least one contaminant.

For a further understanding of the nature and objects for the present invention, reference should be made to the following detailed description, taken in conjunction with the accompanying drawings, in which like elements are given the same or analogous reference numbers and wherein:
- Figure 1 is an illustration of various sessile drop contact angles.
- Figure 2 is a schematic representation of a typical cylinder, indicating the removal of coupons, in accordance with one embodiment of the present invention.
- Figure 3 is a schematic representation of the contact angle measurement utilizing a coupon removed from a cylinder, in accordance with one embodiment of the present invention.
- Figure 4 is a schematic representation of the contact angle measurement performed in situ, in accordance with one embodiment of the present invention.

### Element Numbers

- 101 =: gas cylinder
- 102 =: interior surface (of gas cylinder)
- 103 =: coupon (to be removed from the gas cylinder)
- 104 =: light source
- 105 =: video processing device
- 106 =: syringe
- 107 =: control and processing system
- 108 =: filter
- 109 =: micromanipulator
- 110 =: drop to be tested

In a pressurized cylinder, the likelihood of the various components of the calibration gas mixture reacting increases with the cleanliness of the cylinder and the reactivity of the inner surface. The interior surface of the cylinder is often credited with affecting the stability of the calibration mixture. The more reactive the mixture, the more pronounced this effect is.

Often it is necessary to chemically alter, or inert, the inner surface of the cylinder in order to achieve stability. For example, when a 100 ppb H2S mixture is prepared in an aluminum alloy 6061 gas cylinder without surface treatment, the stability of the mixture is quickly compromised. Increasing the stability is realized with passivation and surface treatment followed by passivation.

One of the most important factors affecting the shelf life of a gas mixture is the reactivity of the components of the mixture with any contaminants that may be present on the interior surface of the cylinder. One of the main properties affecting the stability of a gas mixture is the chemical composition and concentration of impurities present on the interior surface. Even visible residues left on the surface during the cleaning process are known to cause mixture stability issues. In some cases, process chemicals used during the manufacture of the cylinders may remain on the interior of the cylinder after cleaning.

Compressed gas cylinders are typically made of either an aluminum alloy or steel. Steel cylinders are typically only used for non-reactive gas mixtures. The cylinders used to contain calibration gas are typically made from an aluminum alloy, such as 3003. As aluminum is a very ductile metal, cylinders are typically produced by an extrusion process, such as pressure extruding. Such a process requires a lubricant at the interface between the extrusion die and the aluminum, to ensure the extruded part release easily from the die. One of the most common such lubricant is zinc stearate.

Commercial zinc stearate is actually a mixture of zinc stearate, zinc palmitate and zinc oxide. While zinc stearate and zinc palmitate are insoluble in water, they are soluble in some organic solvents.

Typically, a dedicated cleaning process is used to remove the lubricant. If the cleaning baths are not properly maintained, filtered, and/or changed before becoming exhausted, the zinc compounds could redeposit on the cylinders. Such incomplete cleaning of the lubricant has bene found to occur on some cylinders. A manual inspection process often fails to identify all of the improperly cleaned cylinders at the manufacturing site.

This redeposition issue can really only be addressed by cylinder manufacturers by utilizing careful monitoring, filtering, and change out procedures for the cleaning baths. Visual inspection of the cylinders can be very tedious, requiring the assessment of large numbers of cylinders.

This may result in a concentration decrease, or an alteration of the mixture composition, of calibration gas mixtures in these cylinders. This may lead to costly failures at customer sites. And the actual criteria for passing or failing may not be easily defined or identified.

The instant method utilizes measuring the contact angle of a liquid, preferably water, on the surface in question, preferably the interior surface of a cylinder or cylinder component. This procedure is commonly called the sessile drop technique. The contact angle is the angle formed by a line tangent to the intersection of the droplet with the surface and the surface itself. A drop of water resting at equilibrium on a surface will intersect that surface at a measureable angle, called the contact angle

The contact angle of the liquid will indicate the wettability of this surface. Wetting describes the degree to which a liquid spreads onto a solid when it comes in contact with it. One measure of wettability is the contact angle. The wettability can be used to determine if the surface is hydrophobic or hydrophilic. The contact angle can therefore be used to validate the cleanliness of the surface.

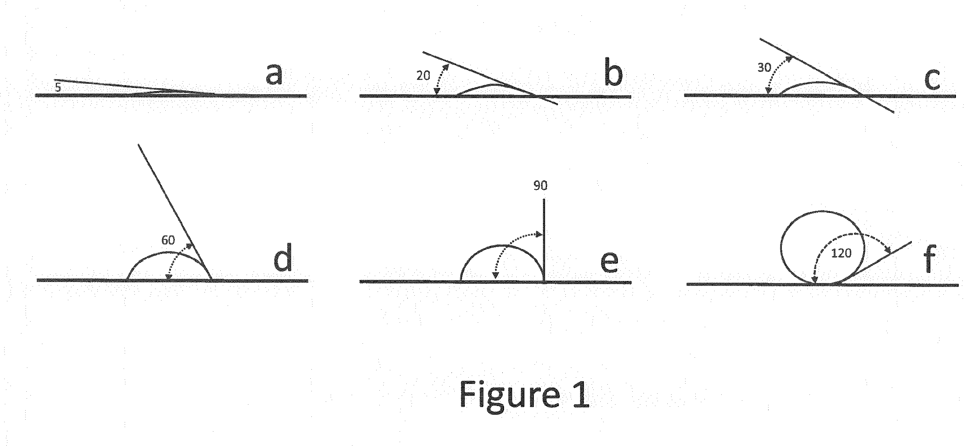

In the case of complete wetting, the contact angle would theoretically be zero. Generally speaking, if the contact angle is less than 90, as represented in Figures 1a-1d, the surface is said to be wettable or hydrophillic. Likewise, if the contact angle is greater than 90, as represented in Figures 1e and 1f, the surface is said to be non-wettable or hydrophobic. Practically, for hydrophobic surfaces, the angle is always greater than 90 degrees, and can be as high as 180 degrees. Hydrophilic coatings always have a contact angle of less than 90 degrees, and usually less than 50 degrees.

A clean aluminum surface suitable for stable calibration standards should have a contact angle of less than 50 degrees, preferably less than 30 degrees. Measurement of the contact angle can be done utilizing commercially available equipment, for example by Kruss and Bolin Scientific.

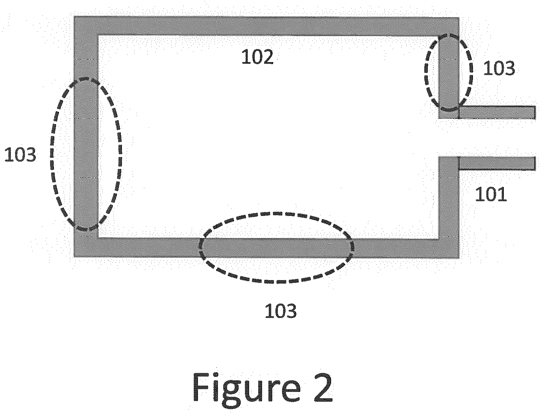

Turning to Figure 2, a typical gas cylinder **101** with an interior surface **102** is illustrated. In some embodiment cylinder **101** is made of aluminum. Cylinder **101** may be made of aluminum alloy 3003 and/or aluminum alloy 6061. In some embodiments, cylinder **101** has a body that was manufactured by cold extrusion. The cold extrusion process typically utilizes a releasing agent to keep the aluminum and the die separate. The releasing agent zinc stearate may be the at least one contaminant.

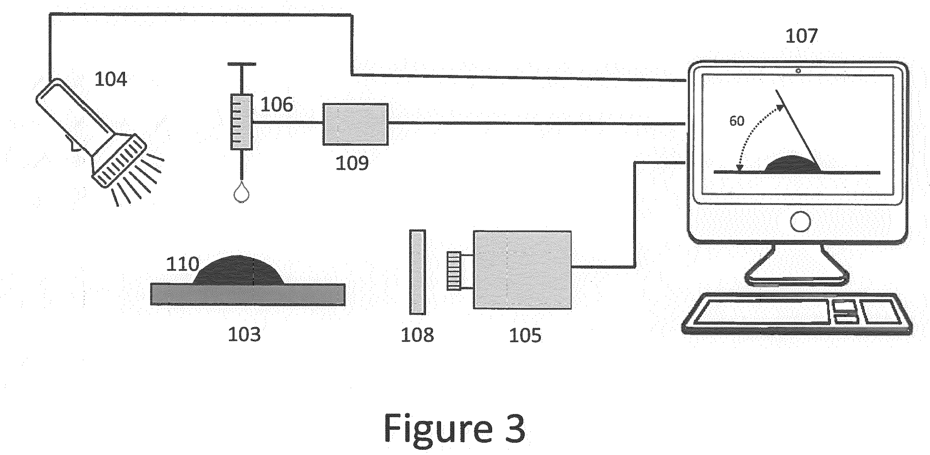

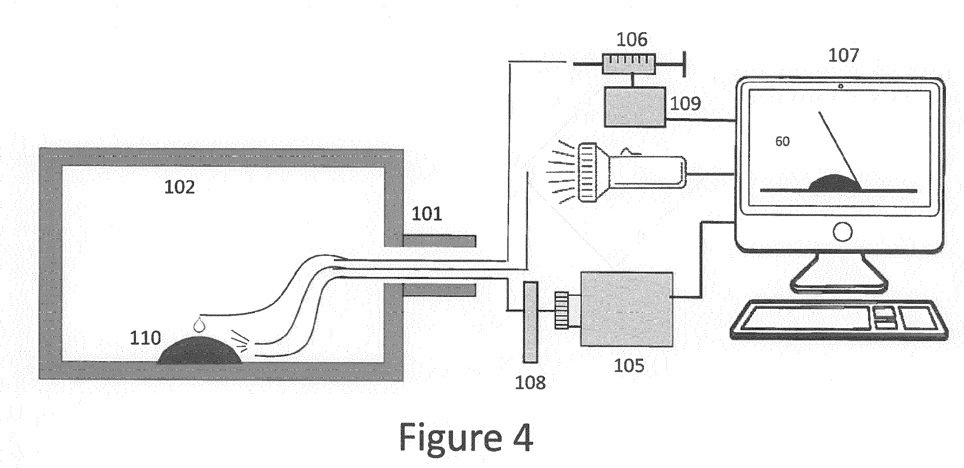

In one embodiment, as illustrated in Figure 3, sample cylinders may be cut into representative segments, or coupons, **103**. Coupon **103** may then be tested with the instant method. In another embodiment, as illustrated in Figure 4, the interior **102** of cylinder **101** may be tested in situ.

Turning to Figure 3, a method of gas cylinder interior cleanliness validation is illustrated. During this method, droplet **110** is placed on substrate **103** and analyzed. This method includes a light source **104**, a video processing device **105**, device for supplying droplet **110** such as syringe **106**, and a control and processing system **107**. Light source **104** may be a homogeneous LED source. Light source **104** should heat droplet **110** or the substrate **103** as little as possible, and thus avoiding potential interference with the measurement. In order to be able to obtain the sharpest contrast along the surface of droplet **110**, a continuously adjustable LED may be utilized.

Video processing device **105** may be a high-resolution camera, such as a digital or CCD camera. Included with video processing device **103** may be one or more filters **108** to suppress scattered light emanating from the substrate, or other local surfaces. Light source **104** should be of a type to provide as sharp an edge of droplet **106** as possible for the video processing device **105.**

Device for supplying the droplet **106** may be a syringe such as a microliter syringe. The syringe may be connected to a micromanipulator **109**, which may be controlled by control and processing system **107**.

To place the volume of liquid **110** is place on coupon **103**, control and processing system **107** controls syringe **106** which releases a drop of liquid. In some embodiments, the liquid is water. Drop **110** then expands into the equilibrium point between the cohesion within the liquid and the adhesion with the surface of the coupon. While being illuminated, typically back lit, by light source **104**, video processing device **103** captures the shape, or profile, of drop **110** and sends this image, or images, to control and processing system **107**. The contact angle is the angle between the surface of the liquid and the outline of the contact surface (see Figure 1). Preferably, this contact angle is measured multiple times at the same location, or at multiple locations on the coupon, in order to eliminate any anomalies. The above measurement may be performed under pre-specified conditions of temperature, pressure, and air relative humidity, to allow for comparison of a plurality of contact angle measurements.

In one embodiment, a contact angle that is less than or equal to 50 degrees indicates an adequately clean component, while a contact angle that is greater 50 degrees indicates an inadequately clean component. In another embodiment, a contact angle that is less than or equal to 30 degrees indicates an adequately clean component, while a contact angle that is greater 30 degrees indicates an inadequately clean component.

In addition to the above sessile drop test of contact angle, visually inspecting the interior surface for evidence of staining is also preferred. In one embodiment, after the cylinder, or interior surface, cleanliness has been validated, the interior surface may be subsequently exposed to a reactive gas or reactive gas mixture, which would have experienced accelerated decomposition or storage reaction rate if the measured contact angle were to exceed 50 degrees, or preferably 30 degrees. The reactive gas, or reactive gas mixture, may include hydrogen sulfide.

During the in situ test illustrated in Figure 4, the actions of light source **104**, video processing device **105**, and/or syringe **106** may be displaced to occur inside of cylinder **101**. Any means known to the art for introducing a droplet of liquid into cylinder **101** may be utilized. Such means may be, but is not limited to, rigid tubing, flexile tubing or polymer tubing. Any means known to the art for introducing a directed light source onto the resulting droplet within cylinder **101** may be utilized. Such means may be, but is not limited to, fiber optic cable. Any means known in the art for receiving an image of the profile of droplet **110** inside cylinder **101** may be utilized. Such means may be, but is not limited to, fiber optic cable. In one embodiment, at least two of these means are bundled together and introduced into cylinder **101** as one. In another embodiment, each means is introduced into cylinder **101** individually.

It will be understood that many additional changes in the details, materials, steps and arrangement of parts, which have been herein described in order to explain the nature of the invention, may be made by those skilled in the art within the principle and scope of the invention as expressed in the appended claims. Thus, the present invention is not intended to be limited to the specific embodiments in the examples given above.

## Claims

1. A method of gas cylinder interior cleanliness validation, comprising:
a) placing a volume of liquid (110) on an interior surface (102) of a component of a gas cylinder (101),
b) measuring a contact angle of the liquid (110) on the interior surface (102), and
c) estimating from the contact angle the cleanliness of the interior surface (102) with respect to at least one contaminant.

2. The method of claim 1, wherein the liquid is water.

3. The method of claims 1 or 2, wherein the component is the interior surface (102) of a cylinder body (101).

4. The method of any of the preceding claims, wherein the gas cylinder (101) is made of aluminum.

5. The method of any of the preceding claims, wherein the aluminum is aluminum alloy 3003 and/or aluminum alloy 6061.

6. The method of any of the preceding claims, wherein the cylinder body (101) was manufactured by cold extrusion.

7. The method of any of the preceding claims, wherein the at least one contaminant is zinc stearate.

8. The method of any of the preceding claims, wherein the interior surface (102) is physically separated (103) from the gas cylinder (101) prior to having the volume of liquid (110) placed thereon.

9. The method of any of the preceding claims, wherein the volume of liquid (110) is placed on the interior surface (102) in situ.

10. The method of any of the preceding claims, further comprising:
a1) visually inspecting the interior surface (102) for staining.

11. The method of any of the preceding claims, wherein:
• a contact angle that is less than or equal to 50 degrees indicates an adequately clean component, and
• a contact angle that is greater 50 degrees indicates an inadequately clean component.

12. The method of any of the preceding claims, wherein:
• a contact angle that is less than or equal to 30 degrees indicates an adequately clean component, and
• a contact angle that is greater 30 degrees indicates an inadequately clean component.

13. The method of any of the preceding claims, wherein steps b) and c) are performed under pre-specified conditions of temperature, pressure, and air relative humidity, for comparison of a plurality of contact angle measurements.

14. The method of any of the preceding claims, wherein the interior surface (102) is subsequently exposed to a reactive gas or reactive gas mixture, which would experience accelerated decomposition or storage reaction rate if the measured contact angle were to exceed 30 degrees.

15. The method of claim 14, wherein the interior surface (102) is subsequently exposed to a reactive gas or reactive gas mixture, which would experience accelerated decomposition or storage reaction rate if the measured contact angle were to exceed 20 degrees.

16. The method of claim 14, wherein the reactive gas or reactive gas mixture comprises hydrogen sulfide.

17. The method of claim 15, wherein the reactive gas or reactive gas mixture comprises hydrogen sulfide.
